# EUROPEAN PATENT SPECIFICATION

(11) **EP 3 968 602 B1**
(45) Date of publication and mention of the grant of the patent: **22.05.2024**
(21) Application number: 20195724.8
(22) Date of filing: 11.09.2020
(51) Int. Cl.: H04L 67/12, H04L 67/55, H04L 67/562, H04L 12/46

(54) **AN ONLINE CONNECTIVITY UNIT IN AN ELECTRONIC CONTROL UNIT OF A VEHICLE, CORRESPONDING METHOD AND CORRESPONDING COMPUTER PROGRAM PRODUCT**
ONLINE-KONNEKTIVITÄTSEINHEIT IN EINER ELEKTRONISCHEN STEUEREINHEIT EINES FAHRZEUGS, ZUGEHÖRIGES VERFAHREN UND ZUGEHÖRIGES COMPUTERPROGRAMMPRODUKT
UNITÉ DE CONNECTIVITÉ EN LIGNE DANS UNE UNITÉ DE COMMANDE ÉLECTRONIQUE D'UN VÉHICULE, PROCÉDÉ CORRESPONDANT ET PRODUIT DE PROGRAMME INFORMATIQUE CORRESPONDANT

(43) Date of publication of application: 16.03.2022
(73) Proprietor: VOLKSWAGEN AG, 38440 Wolfsburg (DE)
(72) Inventor: Bas, Frederik, 5262 EW Vught (NL)

(56) References cited:
- US-A1- 2018 167 476
- US-A1- 2018 232 959

## Description

The invention relates to an online connectivity unit for an electronic control unit of a vehicle according to the independent device claim. Further, the invention relates to an electronic control unit for controlling a plurality of vehicle devices in a vehicle comprising a corresponding online connectivity unit according to the further independent device claim. Furthermore, the invention relates to a vehicle comprising a corresponding electronic control unit according to the third independent device claim. Also, the invention is related to a method for providing mobile online services in a vehicle according to the independent method claim. Moreover, the invention relates to a computer program product for a corresponding method according to the independent product claim.

Vehicle communication systems using a publish-subscribe messaging protocol are basically known, for example from DE 10 2018 130 216 A1. Multiple vehicle devices in the vehicle subscribed to a publish-subscribe messaging environment using different topics provided by various backend brokers need to share a single connection to one or more backend brokers. This limitation is driven by resource limits on backend side as well as in the vehicle. US 2018/232959 A1 discloses a so-called Enhanced Communication Gateway implementing a pub/sub mechanism between one or more Electronic Control Units at a vehicle and a backend cloud entity.

The aim of the present invention is to provide an online connectivity unit comprised in an electronic control unit of a vehicle as claimed in claim 1, a corresponding method as claimed in claim 12 and a respective computer program product as claimed in claim 15. Preferred embodiments are covered by the appended dependent claims.

Embodiments of the invention and its further developments, as well as its advantages, will be explained in more detail below using figures. The figures show schematically:

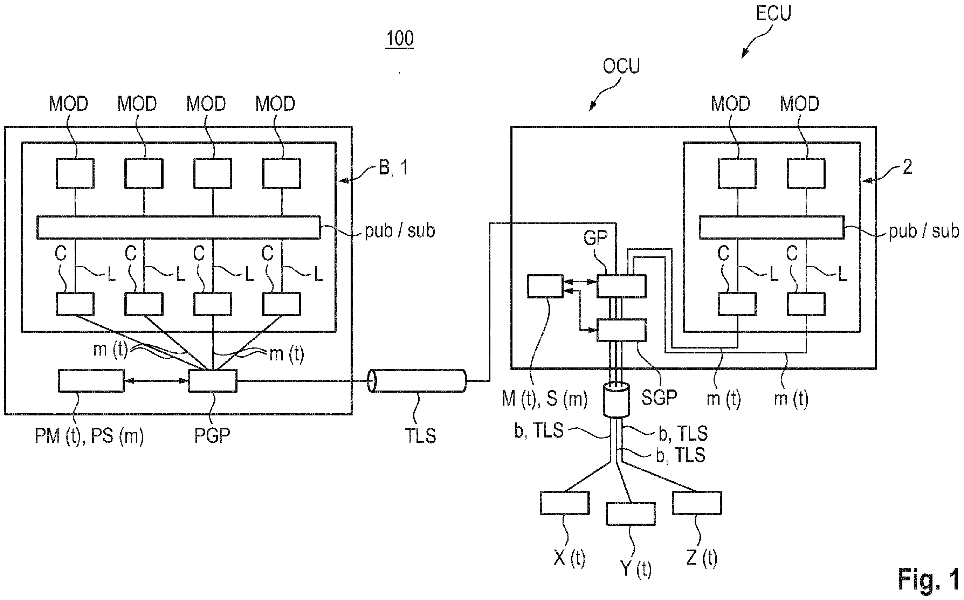

Fig. 1 a schematic design of an online connectivity unit within the meaning of the invention.
Figure 1 shows the first aspect of the invention which is an online connectivity unit OCU. The online connectivity unit OCU may be provided as an individually operable and/or usable part of an electronic unit ECU of a vehicle 100. The corresponding electronic unit ECU and the vehicle 100 represent further aspects of the invention, they are not shown in detail on the grounds of simplicity.

The online connectivity unit OCU comprises:
- a plurality of connectivity subunits C for corresponding vehicle devices MOD using mobile online services. The connectivity subunits C may support for example Message Queuing Telemetry Transport (MQTT), Advanced Message Queuing Protocol (AMQP) or Representational state transfer (REST) protocols. The vehicle devices MOD may be, for example, sensor, safety, environment, information, entertainment and/or comfort devices.

The vehicle devices MOD are configured to subscribe to a publish-subscribe messaging environment pub/sub using different topics t provided by various backend brokers X, Y, Z.

The connectivity subunits C are configured to publish and/or to receive messages m corresponding to the different topics t. The messages m may include for example subscribe, unsubscribe, connect or disconnect requests, topic, content and/or publish information.

The online connectivity unit OCU may further comprise a managing connecting gateway GP for routing the messages m between the plurality of the connectivity subunits C and the various backend brokers X, Y, Z. The managing connecting gateway GP may be advantageously implemented in the online connectivity unit OCU by means of hardware, software and/or special storage and control unit building blocks. The connectivity subunits C may also be named clients, for example MQTT clients.

The managing connecting gateway GP is connected to the plurality of the connectivity subunits C over at least one communication line TLS. The at least one communication line TLS may comprise different communication lines L from the different connectivity subunits C to an project connecting gateway PGP then sending the messages m over single one communication line TLS common for all connectivity subunits C to the managing connecting gateway GP like a spider web with two centers in the project connecting gateway PGP and the managing connecting gateway GP. Also, it is possible that the at least one communication line TLS may comprise different communication lines L from the different connectivity subunits C directly to the managing connecting gateway GP like a spider web with one center in the managing connecting gateway GP.

The managing connecting gateway GP is configured to provide a communication interface for the messages m from the plurality of the connectivity subunits C with different connection bridges b to the various backend brokers X, Y, Z according to the different topics t to which the connectivity subunits C are subscribed. The managing connecting gateway GP may comprise a not shown service router for establishing the traffic directing functions on the Internet.

The managing connecting gateway GP may also be called Message Queuing Telemetry Transport (MQTT) broker gateway and serves for addressing messages m between the plurality of different connectivity subunits C and for the variety of backend brokers X, Y, Z, wherein cross connections between the plurality of the connectivity subunits C and the various backend brokers X, Y, Z may be made. The inventive managing connecting gateway GP creates multiple bridges b towards multiple backend brokers X, Y, Z based on the topics t for which the connectivity subunits C are subscribed.

Thus, the managing connecting gateway GP provides connection mapping. For this aim, the managing connecting gateway GP may comprise a subscription mapping repository M for the different topics t provided by various backend brokers X, Y, Z and for subscriptions of the connectivity subunits C to the different topics t. The managing connecting gateway GP may address messages m using a topic routing to distribute the messages m to the correct backend brokers X, Y, Z. According to invention, if one message m published by a connectivity subunit C has a topic t that is supported by multiple backend brokers X, Y, Z, then this message m may be correspondingly forwarded to matching backend brokers X, Y, Z. Also, if one message m published by a backend broker X; Y; Z has a topic t to which multiple connectivity subunits C are subscribed, this message m may be correspondingly forwarded to the matching connectivity subunits C.

The subscription mapping repository M may represent a relationship between topics t and one or more backend brokers X, Y, Z. The subscription mapping repository M may also contain subscribing clients, that is connectivity subunits C. The subscription mapping repository M may be provided in form of a database, a table, a file, an XML or JSON structure and so on filed in with a plurality of entries. The subscription mapping repository M may be in a permanent storage. The subscription mapping repository M may also comprise routing rules. Routing rules may be for example dependent on message protocol, type, authorization and/or identity of the connectivity subunits C, time of publishing of the message m and so on. Routing rules may comprise a topic t and a corresponding backend broker or corresponding backend brokers X, Y, Z. If, for example, a published message m by a connectivity unit C has a topic t that matches multiple rules, then the message m may be forwarded to multiple brokers X, Y, Z.

Further, the managing connecting gateway GP comprises a storage unit S for the messages m published by the connectivity subunits C and/or by the various backend brokers X, Y, Z in order to store the messages m for the case that the connection to the certain backend broker X, Y, Z is not estimated, interrupted or queues of waiting connectivity subunits C exists and so on.

Figure 1 shows that the managing connecting gateway GP may have a (at least one or more than one) project connecting gateway PGP (for example in form of a local broker of mosquito type) to form a spider web with two (or more) centers in the (at least one or more than one) project connecting gateway PGP and the managing connecting gateway GP. The project connecting gateway PGP may be connected to a (at least one or more than one corresponding) group(s) of the connectivity subunits C of a first type 1 over individual communication lines L. The project connecting gateway PGP may also be connected to the managing connecting gateway GP over a single communication line TLS common for all connectivity subunits C of the first type 1. A project connecting gateway PGP may be used to provide a simple building block B for a modular design of the online connectivity unit OCU for a certain project, for example an entertainment project or for a comfort project or the like. For each project, an individual module with corresponding project connecting gateway PGP may be provided. By means of project connecting gateway PGP, new projects may be flexibly added, exchanged and/or upgraded in the vehicle 100.

Furthermore, figure 1 shows that the plurality of the connectivity subunits C may comprise a group of the connectivity subunits C of the second type 2 connected to the managing connecting gateway GP over individual communication lines L. According to the invention, only the group of the connectivity subunits of the second type 2 may be provided so that the managing connecting gateway GP forms only one center within a spider web to different connectivity subunits C of the second type 2 and to various backend brokers X; Y; Z. Nevertheless, the invention may provide many groups of the connectivity subunits C of the first type 1 (for example for different projects) together with one group of the connectivity subunits of the second type 2.

As figure 1 further shows, the managing connecting gateway GP may comprise a proxy server SGP to translate the messages m and/or to provide authentication and/or authorization between the plurality of the connectivity subunits C and the various backend brokers X, Y, Z. The invention may foresee that the managing connecting gateway GP decrypts the messages m for purposes of routing to the various backend brokers X, Y, Z. After assigning messages m to the corresponding backend brokers X, Y, Z the messages m may then be encrypted again.

On the side of the project connecting gateway PGP, a corresponding project subscription mapping repository PM for the different topics t provided by various backend brokers X, Y, Z and for the connectivity subunits C of the first type 1 subscribed to the different topics t may be provided. Also, a project storage unit PS for the messages m published by the connectivity subunits C of the first type 1 and/or by the various backend brokers X, Y, Z may be provided on the side of the project connecting gateway PGP. Thus, the project connecting gateway PGP may provide a separate building block B for a certain project for a modular design of the online connectivity unit OCU in an advantageous way.

As vehicle devices MOD using the online connectivity unit OCU for connection to various backend brokers X, Y, Z may be following devices:
- sensor device, such as crash-sensor, velocity sensor, and so on,
- safety device, such as breakdown call, emergency call,
- environment device, such as weather forecast, pollutant load sensor, environmental zone detection unit,
- information device, for example for online traffic information, online destination import, online route import, online POI search, my POIs, petrol stations, parking spaces, vehicle status report, time manager, weather, news and so on,
- entertainment device, for example for streaming services, and/or
- comfort device, such as door closing detectors, light off detectors, parking position detectors, vehicle status and/or condition detector, trip data base, user calendar, information call and so on.

The invention further provides a method for providing mobile online services in a vehicle 100 with a plurality of vehicle devices MOD subscribed to a publish-subscribe messaging environment pub/sub using different topics t provided by various backend brokers X, Y, Z, and an electronic control unit ECU configured as describe above, for controlling the vehicle devices MOD, such as sensor, safety, environment, information, entertainment and/or comfort devices, the method comprising:
- establishing of connections to the plurality of the connectivity subunits C over at least one communication line L, TLS;
- providing different connection bridges b for the messages m from the plurality of the connectivity subunits C to the various backend brokers X, Y, Z; and
- routing the messages m between the plurality of the connectivity subunits C and the various backend brokers X, Y, Z over the at least one communication line L, TLS and/or the different connection bridges b according to the different topics t to which the connectivity subunits C are subscribed.

For establishing of connections an at least one project connecting gateway PGP may be used, which is connected to an at least one corresponding group of the connectivity subunits C of a first type 1, over individual communication lines L, and which is connected to the managing connecting gateway GP over a single communication line TLS common for all connectivity subunits C of the first type 1.

The method may further comprise establishing of connections to a group of the connectivity subunits C of the second type 2 (for, especially individually and/or universal code programmable, for example java programmable, vehicle devices MOD) over individual communication lines L, wherein the different connection bridges b and/or the routing of the messages m of the group of the connectivity subunits C of the second type 2 will be provided.

A respective computer program product comprising a program code for carrying out a method as described above represents another aspect of the invention.

The above description of the figures describes the present invention only in the context of examples. Of course, individual features of the embodiments may be combined with each other, provided it is technically reasonable, without leaving the scope of the invention as defined by the appended claims.

### Reference signs

- ECU: electronic control unit

- OCU: online connectivity unit
- C: connectivity subunits

- B: building block

- PGP: project connecting gateway
- PM: project subscription mapping repository
- PS: project storage unit

- pub/sub: publish-subscribe messaging environment

- L, TLS: at least one communication line
- TLS: single communication line
- L: individual communication line

- GP: managing connecting gateway
- M: subscription mapping repository
- S: storage unit

- SGP: proxy server

- X: backend broker
- Y: backend broker
- Z: backend broker

- b: connection bridges
- m: messages
- t: topics

- 100: vehicle

- MOD: vehicle device

## Claims

1. An online connectivity unit (OCU) for an electronic control unit (ECU) of a vehicle (100), the online connectivity unit comprising:
- a plurality of connectivity subunits (C) for corresponding vehicle devices (MOD), configured to subscribe to a publish-subscribe messaging environment (pub/sub) using different topics (t) provided by various backend brokers (X, Y, Z), wherein the connectivity subunits (C) are configured to publish and/or to receive messages (m) corresponding to the different topics (t); and
- a managing connecting gateway (GP) for routing the messages (m) between the plurality of the connectivity subunits (C) and the various backend brokers (X, Y, Z), wherein the managing connecting gateway (GP) is connected to the plurality of the connectivity subunits (C) over at least one communication line (L, TLS), and
wherein the managing connecting gateway (GP) is configured to provide a communication interface for the messages (m) from the plurality of the connectivity subunits (C) with different connection bridges (b) to the various backend brokers (X, Y, Z) according to the different topics (t) to which the connectivity subunits (C) are subscribed.

2. The online connectivity unit (OCU) according to claim 1,
**characterized in that**
the online connectivity unit comprises a project connecting gateway (PGP), which is connected to a group of the connectivity subunits (C) of a first type (1) over individual communication lines (L), and which is connected to the managing connecting gateway (GP) over a single communication line (TLS) common for all connectivity subunits (C) of the first type (1).

3. The online connectivity unit (OCU) according to claim 1 or 2,
**characterized in that**
the plurality of the connectivity subunits (C) comprises a group of the connectivity subunits (C) of a first type (1) connected to a project connecting gateway (PGP) over individual communication lines (L),
wherein the project connecting gateway (PGP) is connected to the managing connecting gateway (GP) over a single communication line (TLS) common for all connectivity subunits (C) of the first type (1).

4. The online connectivity unit (OCU) according to one of the preceding claims, **characterized in that**
the plurality of the connectivity subunits (C) comprises a group of the connectivity subunits (C) of a second type (2) connected to the managing connecting gateway (GP) over individual communication lines (L).

5. The online connectivity unit (OCU) according to one of the preceding claims, **characterized in that**
the managing connecting gateway (GP) comprises a proxy server (SGP) to translate the messages (m) and/or to provide authentication and/or authorization between the plurality of the connectivity subunits (C) and the various backend brokers (X, Y, Z).

6. The online connectivity unit (OCU) according to one of the preceding claims, **characterized in that**
the managing connecting gateway (GP) comprises a subscription mapping repository (M) for the different topics (t) provided by various backend brokers (X, Y, Z) and for the subunits (C) subscribed to the different topics (t).

7. The online connectivity unit (OCU) according to one of the preceding claims, **characterized in that**
the managing connecting gateway (GP) comprises a storage unit (S) for the messages (m) published by the connectivity subunits (C) and/or by the various backend brokers (X, Y, Z).

8. The online connectivity unit (OCU) according to one of the preceding claims 2 or 3, **characterized in that**
the project connecting gateway (PGP) comprises a project subscription mapping repository (PM) for the different topics (t) provided by various backend brokers (X, Y, Z) and for the connectivity subunits (C) of the first type (1) subscribed to the different topics (t),
and/or the project connecting gateway (PGP) comprises a project storage unit (PS) for the messages (m) published by the connectivity subunits (C) of the first type (1) and/or by the various backend brokers (X, Y, Z).

9. An electronic control unit (ECU) for controlling a plurality of vehicle devices (MOD) in a vehicle (100), the electronic control unit comprising an online connectivity unit (OCU) according to one of the preceding claims for providing mobile online services for the vehicle devices (MOD) in a publish-subscribe messaging environment (pub/sub) using different topics (t) provided by various backend brokers (X, Y, Z).

10. A vehicle (100) comprising an electronic control unit (ECU) according to the preceding claim.

11. A vehicle (100) according to the preceding claim,
**characterized in that**
wherein the vehicle comprises a plurality of vehicle devices (MOD) communicatively coupled to the online connectivity unit for connection to various backend brokers (X, Y, Z), wherein the plurality of vehicle device comprises at least one of the following devices:
- sensor device,
- safety device,
- environment device,
- information device,
- entertainment device, and/or
- comfort device.

12. A method for providing mobile online services in a vehicle (100) comprising a plurality of vehicle devices (MOD) subscribed to a publish-subscribe messaging environment (pub/sub) using different topics (t) provided by various backend brokers (X, Y, Z), and an electronic control unit (ECU) according to claim 9 for controlling the vehicle devices (MOD), the method comprising:
- establishing connections between the plurality of the connectivity subunits (C) and the various backend brokers (X,Y,Z) over at least one communication line (L, TLS),
- providing different connection bridges (b) for the messages (m) from the plurality of the connectivity subunits (C) to the various backend brokers (X, Y, Z),
- routing the messages (m) between the plurality of the connectivity subunits (C) and the various backend brokers (X, Y, Z) over the at least one communication line (L, TLS) and the different connection bridges (b) according to the different topics (t) to which the connectivity subunits (C) are subscribed.

13. The method according to claim 12,
**characterized in that**
establishing connections is established by using a project connecting gateway (PGP), the project connecting gateway being connected to a group of the connectivity subunits (C) of a first type (1) over individual communication lines (L), and being connected to the managing connecting gateway (GP) over a single communication line (TLS) common for all connectivity subunits (C) of the first type (1).

14. The method according to claim 12 or 13,
**characterized in that**
the method further comprises establishing of connections to a group of the connectivity subunits (C) of a second type (2) over individual communication lines (L),
wherein the different connection bridges (b) and/or the routing of the messages (m) of the group of the connectivity subunits (C) of the second type (2) are provided.

15. A computer program product comprising instructions which, when the program is executed by a computer, cause the computer to carry out a method according to any one of claims 12 to 14.

## Patentansprüche

1. Online-Konnektivitätseinheit (OCU) für eine elektronische Steuereinheit (ECU) eines Fahrzeugs (100), wobei die Online-Konnektivitätseinheit Folgendes umfasst:
- mehrere Konnektivitätsuntereinheiten (C) für zugehörige Fahrzeugvorrichtungen (MOD), die dazu ausgelegt sind, eine Publish-Subscribe-Messaging-Umgebung (pub/sub) mittels verschiedener Themen (t), die durch diverse Backend-Broker (X, Y, Z) vorgesehen sind, zu abonnieren, wobei die Konnektivitätsuntereinheiten (C) dazu ausgelegt sind, zu den verschiedenen Themen (t) zugehörige Nachrichten (m) zu veröffentlichen und/oder zu empfangen; und
- ein verwaltendes Verbindungsgateway (GP) zum Leiten der Nachrichten (m) zwischen den mehreren Konnektivitätsuntereinheiten (C) und den diversen Backend-Brokern (X, Y, Z), wobei das verwaltende Verbindungsgateway (GP) über mindestens eine Kommunikationsleitung (L, TLS) mit den mehreren Konnektivitätsuntereinheiten (C) verbunden ist und wobei das verwaltende Verbindungsgateway (GP) dazu ausgelegt ist, eine Kommunikationsschnittstelle für die Nachrichten (m) von den mehreren Konnektivitätsuntereinheiten (C) mit verschiedenen Verbindungsbrücken (b) zu den diversen Backend-Brokern (X, Y, Z) entsprechend den verschiedenen Themen (t), welche die Konnektivitätsuntereinheiten (C) abonnieren, vorzusehen.

2. Online-Konnektivitätseinheit (OCU) nach Anspruch 1, **dadurch gekennzeichnet, dass**
die Online-Konnektivitätseinheit ein Projektverbindungsgateway (PGP) umfasst, welches über einzelne Kommunikationsleitungen (L) mit einer Gruppe der Konnektivitätsuntereinheiten (C) eines ersten Typs (1) verbunden ist und welches über eine einzige Kommunikationsleitung (TLS) für alle Konnektivitätsuntereinheiten (C) des ersten Typs (1) mit dem verwaltenden Verbindungsgateway (GP) verbunden ist.

3. Online-Konnektivitätseinheit (OCU) nach Anspruch 1 oder 2,
**dadurch gekennzeichnet, dass**
die mehreren Konnektivitätsuntereinheiten (C) eine Gruppe Konnektivitätsuntereinheiten (C) eines ersten Typs (1) umfassen, die über einzelne Kommunikationsleitungen (L) mit einem Projektverbindungsgateway (PGP) verbunden sind,
wobei das Projektverbindungsgateway (PGP) über eine einzige Kommunikationsleitung (TLS) für alle Konnektivitätsuntereinheiten (C) des ersten Typs (1) mit dem verwaltenden Verbindungsgateway (GP) verbunden ist.

4. Online-Konnektivitätseinheit (OCU) nach einem der vorstehenden Ansprüche,
**dadurch gekennzeichnet, dass**
die mehreren Konnektivitätsuntereinheiten (C) eine Gruppe Konnektivitätsuntereinheiten (C) eines zweiten Typs (2) umfassen, die über einzelne Kommunikationsleitungen (L) mit dem verwaltenden Verbindungsgateway (GP) verbunden sind.

5. Online-Konnektivitätseinheit (OCU) nach einem der vorstehenden Ansprüche,
**dadurch gekennzeichnet, dass**
das verwaltende Verbindungsgateway (GP) einen Proxy-Server (SGP) umfasst, um die Nachrichten (m) zu übersetzen und/oder eine Authentifizierung und/oder Autorisierung zwischen den mehreren Konnektivitätsuntereinheiten (C) und den diversen Backend-Brokern (X, Y, Z) vorzusehen.

6. Online-Konnektivitätseinheit (OCU) nach einem der vorstehenden Ansprüche,
**dadurch gekennzeichnet, dass**
das verwaltende Verbindungsgateway (GP) ein Abonnement-Mapping-Repository (M) für die von den diversen Backend-Brokern (X, Y, Z) vorgesehenen verschiedenen Themen (t) und für die die verschiedenen Themen (t) abonnierenden Untereinheiten (C) umfasst.

7. Online-Konnektivitätseinheit (OCU) nach einem der vorstehenden Ansprüche,
**dadurch gekennzeichnet, dass**
das verwaltende Verbindungsgateway (GP) eine Speichereinheit (S) für die Nachrichten (m) umfasst, die von den Konnektivitätsuntereinheiten (C) und/oder von den diversen Backend-Brokern (X, Y, Z) veröffentlicht wurden.

8. Online-Konnektivitätseinheit (OCU) nach einem der vorstehenden Ansprüche 2 oder 3,
**dadurch gekennzeichnet, dass**
das Projektverbindungsgateway (PGP) ein Projektabonnement-Mapping-Repository (PM) für die von den diversen Backend-Brokern (X, Y, Z) vorgesehenen verschiedenen Themen (t) und für die die verschiedenen Themen (t) abonnierenden Konnektivitätsuntereinheiten (C) des ersten Typs (1) umfasst,
und/oder das Projektverbindungsgateway (PGP) eine Projektspeichereinheit (PS) für die Nachrichten (m) umfasst, die von den Konnektivitätsuntereinheiten (C) des ersten Typs (1) und/oder von den diversen Backend-Brokern (X, Y, Z) veröffentlicht wurden.

9. Elektronische Steuereinheit (ECU) zum Steuern mehrerer Fahrzeugvorrichtungen (MOD) in einem Fahrzeug (100), wobei die elektronische Steuereinheit eine Online-Konnektivitätseinheit (OCU) nach einem der vorstehenden Ansprüche zum Vorsehen von mobilen Online-Diensten für die Fahrzeugvorrichtungen (MOD) in einer Publish-Subscribe-Messaging-Umgebung (pub/sub) unter Verwendung verschiedener durch diverse Backend-Broker (X, Y, Z) vorgesehener Themen (t) umfasst.

10. Fahrzeug (100), umfassend eine elektronische Steuereinheit (ECU) nach dem vorstehenden Anspruch.

11. Fahrzeug (100) nach dem vorstehenden Anspruch, **dadurch gekennzeichnet, dass**
das Fahrzeug mehrere Fahrzeugvorrichtungen (MOD) umfasst, die zur Verbindung mit diversen Backend-Brokern (X, Y, Z) mit der Online-Konnektivitätseinheit kommunikativ gekoppelt sind, wobei die mehreren Fahrzeugvorrichtungen mindestens eine der folgenden Vorrichtungen umfassen:
- Sensorvorrichtung,
- Sicherheitsvorrichtung,
- Umgebungsvorrichtung,
- Informationsvorrichtung,
- Unterhaltungsvorrichtung und/oder
- Komfortvorrichtung.

12. Verfahren zum Vorsehen von mobilen Online-Diensten in einem Fahrzeug (100), umfassend mehrere Fahrzeugvorrichtungen (MOD), die unter Verwendung verschiedener durch diverse Backend-Broker (X, Y, Z) vorgesehener Themen (t) eine Publish-Subscribe-Messaging-Umgebung (pub/sub) abonnieren, und eine elektronische Steuereinheit (ECU) nach Anspruch 9 zum Steuern der Fahrzeugvorrichtungen (MOD), wobei das Verfahren Folgendes umfasst:
- Herstellen von Verbindungen zwischen den mehreren Konnektivitätsuntereinheiten (C) und den diversen Backend-Brokern (X, Y, Z) über mindestens eine Kommunikationsleitung (L, TLS),
- Vorsehen verschiedener Verbindungsbrücken (b) für die Nachrichten (m) von den mehreren Konnektivitätsuntereinheiten (C) zu den diversen Backend-Brokern (X, Y, Z),
- Leiten der Nachrichten (m) zwischen den mehreren Konnektivitätsuntereinheiten (C) und den diversen Backend-Brokern (X, Y, Z) über die mindestens eine Kommunikationsleitung (L, TLS) und die verschiedenen Verbindungsbrücken (b) entsprechend den verschiedenen Themen (t), welche die Konnektivitätsuntereinheiten (C) abonnieren.

13. Verfahren nach Anspruch 12,
**dadurch gekennzeichnet, dass**
das Herstellen der Verbindungen durch die Verwendung eines Projektverbindungsgateways (PGP) erfolgt, wobei das Projektverbindungsgateway über einzelne Kommunikationsleitungen (L) mit einer Gruppe der Konnektivitätsuntereinheiten (C) eines ersten Typs (1) verbunden ist, und über eine einzige Kommunikationsleitung (TLS) für alle Konnektivitätsuntereinheiten (C) des ersten Typs (1) mit dem verwaltenden Verbindungsgateway (GP) verbunden ist.

14. Verfahren nach Anspruch 12 oder 13,
**dadurch gekennzeichnet, dass**
das Verfahren ferner das Herstellen von Verbindungen mit einer Gruppe der Konnektivitätsuntereinheiten (C) eines zweiten Typs (2) über einzelne Kommunikationsleitungen (L) umfasst, wobei die verschiedenen Verbindungsbrücken (b) und/oder das Leiten der Nachrichten (m) der Gruppe der Konnektivitätsuntereinheiten (C) des zweiten Typs (2) vorgesehen sind.

15. Computerprogrammprodukt, umfassend Anweisungen, die, wenn das Programm von einem Computer ausgeführt wird, bewirken, dass der Computer das Verfahren nach einem der Ansprüche 12 bis 14 ausführt.

## Revendications

1. Unité de connectivité en ligne (OCU) pour une unité de commande électronique (ECU) d'un véhicule (100), l'unité de connectivité en ligne comprenant :
une pluralité de sous-unités de connectivité (C) pour des dispositifs de véhicule (MOD) correspondants, conçues pour s'abonner à un environnement de messagerie par publication-abonnement (pub/sub) utilisant différents sujets (t) fournis par divers courtiers dorsaux (X, Y, Z), les sous-unités de connectivité (C) étant conçues pour publier et/ou recevoir des messages (m) correspondant aux différents sujets (t) ; et
une passerelle de connexion gestionnaire (GP) pour acheminer les messages (m) entre la pluralité de sous-unités de connectivité (C) et les divers courtiers dorsaux (X, Y, Z),
la passerelle de connexion gestionnaire (GP) étant connectée à la pluralité de sous-unités de connectivité (C) sur au moins une ligne de communication (L, TLS), et
la passerelle de connexion gestionnaire (GP) étant conçue pour fournir une interface de communication pour les messages (m) de la pluralité de sous-unités de connectivité (C) avec différents ponts de connexion (b) aux divers courtiers dorsaux (X, Y, Z) en fonction des différents sujets (t) auxquels les sous-unités de connectivité (C) sont abonnées.

2. Unité de connectivité en ligne (OCU) selon la revendication 1,
**caractérisée en ce que**
l'unité de connectivité en ligne comprend une passerelle de connexion de projet (PGP), qui est connectée à un groupe de sous-unités de connectivité (C) d'un premier type (1) sur des lignes de communication individuelles (L), et qui est connectée à la passerelle de connexion gestionnaire (GP) sur une ligne de communication unique (TLS) commune à toutes les sous-unités de connectivité (C) du premier type (1).

3. Unité de connectivité en ligne (OCU) selon la revendication 1 ou 2,
**caractérisée en ce que**
la pluralité de sous-unités de connectivité (C) comprend un groupe de sous-unités de connectivité (C) d'un premier type (1) connecté à une passerelle de connexion de projet (PGP) sur des lignes de communication individuelles (L),
la passerelle de connexion de projet (PGP) étant connectée à la passerelle de connexion gestionnaire (GP) sur une ligne de communication unique (TLS) commune à toutes les sous-unités de connectivité (C) du premier type (1).

4. Unité de connectivité en ligne (OCU) selon l'une des revendications précédentes,
**caractérisée en ce que**
la pluralité de sous-unités de connectivité (C) comprend un groupe de sous-unités de connectivité (C) d'un second type (2) connectées à la passerelle de connexion gestionnaire (GP) sur des lignes de communication individuelles (L).

5. Unité de connectivité en ligne (OCU) selon l'une des revendications précédentes,
**caractérisée en ce que**
la passerelle de connexion gestionnaire (GP) comprend un serveur mandataire (SGP) pour traduire les messages (m) et/ou assurer l'authentification et/ou l'autorisation entre la pluralité de sous-unités de connectivité (C) et les divers courtiers dorsaux (X, Y, Z) .

6. Unité de connectivité en ligne (OCU) selon l'une des revendications précédentes,
**caractérisée en ce que**
la passerelle de connexion gestionnaire (GP) comprend un référentiel de mappage d'abonnement (M) pour les différents sujets (t) fournis par divers courtiers dorsaux (X, Y, Z) et pour les sous-unités (C) abonnées aux différents sujets (t).

7. Unité de connectivité en ligne (OCU) selon l'une des revendications précédentes,
**caractérisée en ce que**
la passerelle de connexion gestionnaire (GP) comprend une unité de stockage (S) pour les messages (m) publiés par les sous-unités de connectivité (C) et/ou par les divers courtiers dorsaux (X, Y, Z).

8. Unité de connectivité en ligne (OCU) selon l'une des revendications précédentes 2 ou 3,
**caractérisée en ce que**
la passerelle de connexion de projet (PGP) comprend un référentiel de mappage d'abonnement de projet (PM) pour les différents sujets (t) fournis par divers courtiers dorsaux (X, Y, Z) et pour les sous-unités de connectivité (C) du premier type (1) abonnées aux différents sujets (t),
et/ou la passerelle de connexion de projet (PGP) comprend une unité de stockage de projet (PS) pour les messages (m) publiés par les sous-unités de connectivité (C) du premier type (1) et/ou par les divers courtiers dorsaux (X, Y, Z).

9. Unité de commande électronique (ECU) pour commander une pluralité de dispositifs de véhicule (MOD) dans un véhicule (100), l'unité de commande électronique comprenant une unité de connectivité en ligne (OCU) selon l'une des revendications précédentes pour fournir des services mobiles en ligne pour les dispositifs de véhicule (MOD) dans un environnement de messagerie par publication-abonnement (pub/sub) en utilisant différents sujets (t) fournis par divers courtiers dorsaux (X, Y, Z) .

10. Véhicule (100) comprenant une unité de commande électronique (ECU) selon la revendication précédente.

11. Véhicule (100) selon la revendication précédente, **caractérisé en ce que**
le véhicule comprend une pluralité de dispositifs de véhicule (MOD) couplés de manière communicative à l'unité de connectivité en ligne pour la connexion à divers courtiers dorsaux (X, Y, Z), la pluralité de dispositifs de véhicule comprenant au moins l'un des dispositifs suivants :
dispositif capteur,
dispositif de sécurité,
dispositif d'environnement,
dispositif d'information,
dispositif de divertissement, et/ou
dispositif de confort.

12. Procédé pour fournir des services mobiles en ligne dans un véhicule (100) comprenant une pluralité de dispositifs de véhicule (MOD) abonnés à un environnement de messagerie par publication-abonnement (pub/sub) utilisant différents sujets (t) fournis par divers courtiers dorsaux (X, Y, Z), et une unité de commande électronique (ECU) selon la revendication 9 pour commander les dispositifs de véhicule (MOD), le procédé comprenant les étapes consistant à :
établir des connexions entre la pluralité de sous-unités de connectivité (C) et les divers courtiers dorsaux (X, Y, Z) sur au moins une ligne de communication (L, TLS),
fournir différents ponts de connexion (b) pour les messages (m) de la pluralité de sous-unités de connectivité (C) aux divers courtiers dorsaux (X, Y, Z),
acheminer les messages (m) entre la pluralité de sous-unités de connectivité (C) et les divers courtiers dorsaux (X, Y, Z) sur l'au moins une ligne de communication (L, TLS) et les différents ponts de connexion (b) en fonction des différents sujets (t) auxquels les sous-unités de connectivité (C) sont abonnées.

13. Procédé selon la revendication 12,
**caractérisé en ce que**
l'établissement de connexions est réalisé à l'aide d'une passerelle de connexion de projet (PGP), la passerelle de connexion de projet étant connectée à un groupe de sous-unités de connectivité (C) d'un premier type (1) par des lignes de communication individuelles (L), et étant connectée à la passerelle de connexion gestionnaire (GP) par une ligne de communication unique (TLS) commune à toutes les sous-unités de connectivité (C) du premier type (1).

14. Procédé selon la revendication 12 ou 13, **caractérisé en ce que**
le procédé comprend en outre l'étape consistant à établir des connexions avec un groupe de sous-unités de connectivité (C) d'un deuxième type (2) sur des lignes de communication individuelles (L),
les différents ponts de connexion (b) et/ou l'acheminement des messages (m) du groupe de sous-unités de connectivité (C) du deuxième type (2) étant fournis.

15. Programme de programme informatique comprenant des instructions qui, lorsque le programme est exécuté par un ordinateur, amènent l'ordinateur à effectuer le procédé selon l'une quelconque des revendications 12 à 14.
